# EUROPÄISCHE PATENTSCHRIFT

(11) **EP 0 976 698 B1**
(45) Veröffentlichungstag und Bekanntmachung des Hinweises auf die Patenterteilung: **15.10.2003**
(21) Anmeldenummer: 99111831.6
(22) Anmeldetag: 19.06.1999
(51) Int. Cl.: C04B 41/87, C04B 35/565, C04B 35/80, C23C 26/00

(54) **Verfahren zum Erzeugen einer Siliziumkarbid enthaltenden Schutzschicht**
Method of producing a protective coating containing silicon carbide
Procédé de fabrication d'une couche protectrice contenant du carbone de silicium

(30) Priorität: 28.07.1998 DE 19834018
(43) Veröffentlichungstag der Anmeldung: 02.02.2000
(73) Patentinhaber: Deutsches Zentrum für Luft- und Raumfahrt e.V., 53175 Bonn (DE)
(72) Erfinder: Krenkel, Walter, 71272 Renningen (DE); Henke, Thilo, 70563 Stuttgart (DE)
(74) Vertreter: Grimm, Ekkehard, Dipl.-Phys.

(56) Entgegenhaltungen:
- PATENT ABSTRACTS OF JAPAN vol. 17, no. 162 (C-1042), 30. März 1993 (1993-03-30) & JP 04 325481 A (TOKAI CARBON CO., LTD.), 13. November 1992 (1992-11-13)
- PATENT ABSTRACTS OF JAPAN vol. 17, no. 496 (C-1108), 8. September 1993 (1993-09-08) & JP 05 132384 A (TOKAI CARBON CO., LTD.), 28. Mai 1993 (1993-05-28)

## Beschreibung

Die vorliegende Erfindung betrifft ein Verfahren zum Erzeugen einer Siliziumkarbid enthaltenden Schutzschicht, insbesondere einer Verschleiß-, Korrosions- oder Abrasionsschutzschicht gemäß dem Oberbegriff des Anspruchs 1.

Ein solches Verfahren ist aus der DE-A1-42 03 773 bekannt. Gemäß dem daraus bekannten Verfahren wird zur Vergütung der Oberfläche eines Körpers zunächst die zu beschichtende Oberfläche mit einem Mantel aus mindestens einem schmelzbaren Wirkstoff und einem Binder bedeckt und so präpariert einer Temperaturbehandlung bei über 500°C ausgesetzt. Diese Temperaturbehandlung findet im Vakuum oder in einer inerten Atmosphäre statt. Dabei wird der Mantel in einer mindestens teilweise porösen Deckschicht mit äußerer Kruste umgewandelt und die Temperatur dann so erhöht, daß der Erweichungspunkt des Körpers nicht überschritten wird, jedoch der schmelzbare Wirkstoff über seinen Schmelzpunkt erhitzt wird. Diese erhöhte

Temperatur wird dann solange beibehalten, bis der darin enthaltene, geschmolzene Wirkstoff wenigstens teilweise verdampft ist und dabei durch Diffusion eine Oberflächenzone im Körper erzeugt hat, die im Oberflächenmaterial des Körpers mit diesem eine dichte Schicht bildet. Anschließend wird die Deckschicht abgekühlt und vom Körper entfernt. Mittels einem solchen Verfahren können SiC-Schichten als Schutzschichten gebildet werden, wobei dann Si-Pulver und Mehl als Binder auf den Körper aufgebracht werden, eine erste Temperaturbehandlung bei 700 bis 800°C durchgeführt wird, um den Mantel zu verkohlen; darauffolgend wird eine Temperaturbehandlung im Bereich von 1400 bis 1700°C für 1-2 Stunden durchgeführt, um die Kohlenstoffstrukturen zu silizieren. Es entsteht dann ein Körper mit dem SiC-Überzug.

Weiterhin ist aus der DE-U1-296 10 498 eine Fahrzeugbrems- bzw. Fahrzeugkupplungsscheibe bekannt, die aus einem C-C/SiC-Werkstoff aufgebaut ist, wobei die Scheibe eine SiC-Beschichtung aufweist. Diese SiC-Beschichtung ist als Tauchbadschicht gebildet oder wird durch eine Vakuumimprägnierung hergestellt.

Dünne Schutzschichten aus SiC, wie sie in dem vorstehend erwähnten Stand der Technik eingesetzt werden, sind schon bei Raumtemperatur spröde. Aufgrund dieser Sprödigkeit treten im Einsatz Risse und Abplatzungen auf, so daß die angestrebte Wirkung dieser Schicht als Schutzschicht verlorengeht. Diese Sprödigkeit ist insbesondere auch dann zu beobachten, wenn solche mit dieser SiC-Schicht bedeckten Körper Temperaturwechsel-Zyklen unterworfen werden.

Patent Abstract of Japan & JP-A-04325481 beschreibt eine Schutzschicht aus Siliziumkarbid auf einem Substrat, wobei das Substrat ein kohlenstofffaserverstärktes Kohlenstoff-Komposit-Material (C/C-Material) ist. Um die Schutzschicht zu bilden, wird in dem Abstract angegeben, daß auf den Grundkörper eine Pulvermischung aufgebracht wird, die aus einer Siliziumquelle und einem Kohlenstoffmaterial besteht. Eine Wärmebehandlung erfolgt dann bei 1.800-2.000°C in einer nicht-oxidierenden Atmosphäre. Das angegebene Verfahren nach dem Abstract dient nur zur Bildung einer SiC-Schicht. Aus dem Text der dazugehörigen Offenlegungsschrift wird als Si-Quelle pulvriges SiO₂ oder Silikonsand eingesetzt und das Verhältnis von SiO₂:C liegt im Bereich von 1:1 bis 4:1.

Patent Abstracts of Japan & JP-A-05132384 beschreibt ein Verfahren zum Herstellen von einem Kohlenstoff-Komposit, verstärkt mit Kohlenstoff-Fasern, das resistent in Bezug auf eine Oxidation ist. Es wird angegeben, dass ein C/C-Basismaterial mit einem thermisch nicht zersetzbaren, thermisch härtenden Harz beschichtet wird, um Glasisolationsmebrane zu bilden.

Ausgehend von diesem Stand der Technik liegt der Erfindung die Aufgabe zugrunde, einen Körper mit einer Schutzschicht zu bedecken, die die Vorteile einer SiC-Schicht aufweist, allerdings nicht die Sprödigkeit besitzt, wie sie bei den Schutzschichten nach dem Stand der Technik gegeben ist.

Die Aufgabe wird mit einem Verfahren gelöst, das die Merkmale des Anspruchs 1 aufweist. Bevorzugte Ausführungsformen der Erfindung ergeben sich aus den Unteransprüchen.

Um die erfindungsgemäße Schicht zu bilden, ist es zum einen wesentlich, zunächst auf dem zu beschichtenden Grundkörper eine poröse Kohlenstoffschicht bereitzustellen. Zum einen liefert diese poröse Kohlenstoffschicht den Anteil an Kohlenstoff, der mit Silizium zur Reaktion gebracht wird, um die spätere Siliziumkarbidschicht enthaltende Schutzschicht zu bilden, darüberhinaus kann über die Porosität des Körpers der Anteil an freiem Silizium, das für die Eigenschaften der fertiggestellten Schutzschicht wesentlich ist, eingestellt werden, indem die Porosität so gewählt wird, daß ein Überschuß an Silizium verbleibt. Hierbei kann freies Silizium dann zum einen in den Poren eingelagert werden, zum anderen kann der Anteil an Silizium so eingestellt werden, daß auf der Oberfläche der fertiggestellten Schutzschicht eine dünne Schicht, die im wesentlichen nur aus Silizium besteht, verbleibt. Es ist auf jeden Fall darauf zu achten, daß das aufgebrachte Silizium im Verhältnis zu dem Kohlenstoff der porösen Kohlenstoffschicht, in Bezug auf das Verhältnis von Silizium zu Kohlenstoff in Masse-Prozent, mehr als 2,34 beträgt. Der Aufbau einer solchen Schutzschicht benötigt keine organischen Bindemittel, die ansonsten während des Aufheizens durch Abspaltung von Zersetzungsprodukten oder durch Ausgasungen die Reinheit bzw. Güte des Siliziums beinträchtigen würden.

Es hat sich gezeigt, daß mit einer solchen Oberflächenschutzschicht, die einen Anteil an freiem Silizium enthält, praktisch kein Verschleiß auftritt, falls solche mit einer derartigen Oberflächenschicht beschichtete Körper mit organischen Belägen, beispielsweise mit organischen Reibbelägen einer Reibeinheit, in reibendem Kontakt gebracht werden. Darüberhinaus zeichnet sich eine solche Schicht durch eine sehr hohe Thermoschockbeständigkeit aus, d.h. R₁ ≥ 500 K, wobei R₁ als Verhältnis der Zugspannung (σ) zu E · α definiert ist, wobei E das Elastizitätsmodul und α der thermische Ausdehnungskoeffizient der Schutzschicht bezeichnet.

Schutzschichten, wie sie gemäß dem erfindungsgemäßen Verfahren aufgebaut sind, sind insbesondere als Verschleißschutzschichten auf Reibeinheiten, wie Bremsscheiben, als Korrosionsschutzschichten auf rohrförmigen Wärmetauscher-Elementen oder als Abrasionsschutzschichten auf Gleitringdichtungen von Vorteil, um einige bevorzugte Anwendungsbereiche zu nennen.

Es ist ersichtlich, daß solche Schutzschichten nicht erfordern, daß der Körper, der zu beschichten ist, eine gewisse Porosität aufweist, da die Schutzschicht unter Einsatz eines porösen Kohlenstoffkörpers bzw. einer porösen Kohlenstoffschicht auf dem jeweils zu beschichtenden Körper aufgebaut wird. Um die Haftung zwischen dem Grundkörper und der Schutzschicht zu erhöhen, kann es unter Umständen von Vorteil sein, die Rauhigkeit der Oberfläche des zu beschichtenden Grundkörpers definiert einzustellen, beispielsweise auf einen Mittenrauhwert von Ra = 2. Gerade dieser Rauhwert hat den Vorteil, daß eine gleichmäßige, innige Verbindung zwischen der Schutzschicht und dem Grundkörper entsteht.

Mit der Schicht können praktisch beliebige Grundkörper beschichtet werden, die eine Temperaturbeständigkeit für Temperaturen oberhalb des Schmelzpunkts von Silizium aufweisen. Hierunter fallen demzufolge keramische Grundkörper, Grundkörper aus Kohlenstoff, Grundkörper aus Siliziumkarbid, keramische Verbundwerkstoffe, wie C/C, C/C-SiC, SiC/SiC, oder Metalle, wie beispielsweise Wolfram, um die wesentlichen zu nennen.

Für den Aufbau der porösen Kohlenstoffschicht eignen sich Kohlenstoff-Filz, Kohlenstoff-Matten, Kohlenstoff-Gewebe, Kohlenstoff-Folien und/oder Kohlenstoff-Vliese, die, je nach gewünschter Dicke der Schutzschicht, auf den Grundkörper aufgelegt werden. Darüberhinaus kann durch geeignete Wahl der Art dieser vorstehend aufgeführten Kohlenstoff-Materialien die Porosität eingestellt werden. Bevorzugt wird jedoch die Kohlenstoffschicht aus Filzen oder Matten aufgebaut, da sich hierdurch der Vorteil ergibt, daß eine Reaktion des C zu SiC vollständig und schnell erfolgt, insbesondere dann, wenn die Einzelfasern sehr dünn bzw. in amorphem Zustand vorliegen. Alternativ kann die poröse Kohlenstoffschicht auch durch Pyrolysieren von auf den Grundkörper aufgelegtem Papier, Holz, Holzzellstoff und/oder aufgelegter Pappe gebildet werden, wobei die Pyrolyse dieser Materialien während des Aufheizens im Ofen vor dem Aufschmelzen des Siliziums, um mit dem Kohlenstoff zur Reaktion gebracht zu werden, um Siliziumkarbid zu bilden, erfolgt.

Das Silizium, das benötigt wird, kann durch Auftragen von teilchenförmigem Silizium bereitgestellt werden; die Teilchengröße sollte zwischen 0 und 15 mm liegen. Die Teilchengröße wird insbesondere auch unter Berücksichtigung der zu bildenden Schichtdicke ausgewählt. Das Silizium kann auch in Form einer Platte aus Silizium auf den vorbereiteten, porösen Kohlenstoffkörper aufgelegt werden. Ein solches Plattenmaterial hat den Vorteil, daß bei ebenen Teilen eine gleichmäßige Bedeckung der C-Schichten möglich ist.

Um die Schutzschicht nicht mit Fremdmaterialien zu verunreinigen bzw. um sicherzustellen, daß die zu bildende Schutzschicht im wesentlichen nur Siliziumkarbid und freies Silizium enthält, sollte das verwendete Silizium eine Reinheit von 99,9% aufweisen.

Es hat sich gezeigt, daß, um die Vorteile der erfindungsgemäßen Schutzschicht, wie sie vorstehend auch aufgeführt sind, zu erzielen, das Verhältnis von Masse-Prozent (Ma-%) von aufgebrachtem Silizium zu dem Kohlenstoff im Bereich von 2,35 bis 49 liegen sollte. Bevorzugt wird allerdings der Anteil an freiem Silizium in der Schutzschicht auf einen hohen Wert eingestellt, d.h. das freie Silizium sollte, bezogen auf die gesamte Masse der Schutzschicht, bei 50% bis 90%, vorzugsweise bei 70% bis 90% liegen, wobei in dem letzteren Bereich ein Wert von 90% zu bevorzugen ist. Mit diesem hohen Anteil an freiem Silizium wird erreicht, daß die Schutzschicht weniger spröde ist und damit nicht zum Abplatzen (bei thermischer und/oder mechanischer Belastung) nach dem Abkühlen auf Raumtemperatur neigt.

Um einen homogenen Aufbau mit einer hohen Festigkeit zu erzielen, wobei dieser Körper die vorstehend aufgeführten Vorteile der darauf aufgebrachten Schutzschicht aufweist, wird der Grundkörper vorzugsweise aus Kohlenstoff, einem Verbundkörper aus kohlenstoff-faserverstärktem Kohlenstoff, aus C-SiC, C/C-SiC oder aus SiC-SiC aufgebaut. Ein solcher Grundkörper besteht praktisch, in Bezug auf die darauf aufzubringende Schutzschicht, aus artgleichem Material, d.h. im wesentlichen aus Kohlenstoff und Siliziumkarbid.

Bei einem C-SiC-Körper handelt es sich um C-Fasern mit einer SiC-Matrix, relativ porös, hergestellt z.B. nach dem CVI oder LPI-Verfahren (CVI = Chemical Vapour Infiltration, LPI = Liquid Polymer Infiltration).

Bei einem C/C-SiC-Körper handelt es sich um C-Fasern mit einer C+SiC Matrix, bei der keine Nachverdichtung nötig ist, hergestellt z.B. nach dem LSI Verfahren.

Bei einem SiC-SiC-Körper handelt es sich um SiC-Fasern mit einer SiC-Matrix, hergestellt nach dem CVI-Verfahren, ein immer poröser Körper, dessen Oberfläche daher eventuell vor Aufbringen der Schutzschicht nachverdichtet werden sollte.

Eine Schutzschicht mit einer Dicke im Bereich von 0,2 bis 2 mm ist ausreichend, um die damit angestrebten Vorteile zu erzielen. Falls die Schutzschicht zu dünn gewählt wird, tritt der Effekt auf, daß die Schutzwirkung infolge von nicht zu vermeidender Abrasion etc. im Gebrauch verloren geht. Bei Werten oberhalb von 2 mm tritt der Effekt auf, daß infolge von Spannungs-Rißbildungen die Tendenz zum Abplatzen zunimmt. Allgemein gilt, daß sich die Abplatzneigung proportional zur Schichtdicke verhält.

Um eine homogene Schicht aufzubauen, d.h. um eine vollständige Reaktion des vorhandenen Kohlenstoffs mit Silizium zu Siliziumkarbid zu erreichen bzw. sicherzustellen, ist auf im wesentlichen gleichmäßige Heizraten während der Temperaturbehandlung zu achten. Zunächst sollte der Grundkörper mit der darauf vorbereiteten, porösen Kohlenschicht und der darauf aufgebrachten Schicht aus Silizium auf eine Temperatur von etwa 1420°C aufgeheizt werden, um dann die Temperatur auf einen Wert zwischen 1420 und 1650°C zu erhöhen und die Temperatur in diesem Bereich für eine Dauer von 1 bis 60 Minuten beizubehalten. Prinzipiell ist die Haltezeit von der Temperatur und der Dicke abhängig. Bei dünnen Schichten (0,2 mm) wird nur eine geringe Haltezeit (1 min) benötigt, bei dicken Schichten (2 mm) ist eine Haltezeit bis zu 60 min nötig. Voraussetzung hierfür ist eine ausreichend große Porosität, welche dem Silizium ermöglicht, während dieser Haltezeit mit dem gesamten Kohlenstoff zu reagieren. Anschließend sollte dann der mit der Schutzschicht versehene Körper mit einer gleichmäßigen Abkühlrate auf Raumtemperatur abgekühlt werden. Es hat sich gezeigt, daß während dieser Abkühlung Oberflächenrisse bzw. Spannungsrisse entstehen können. Die Risse sind ungewollt und ergeben sich durch Spannungsabbau zwischen Schicht und Grundmaterial infolge einer α-Fehlanpassung. Diese Spannungsrisse können minimiert werden, wenn die Wärmeausdehnung von Schicht und Grundmaterial in etwa die gleiche Größenordnung besitzen.

Die Aufheizung des Grundkörpers auf die Temperatur von 1420°C sollte mit einer Heizrate im Bereich von 40 bis 400 K/h, vorzugsweise von 40 bis 200 K/h, insbesondere von 80 K/h, erfolgen, die einen Kompromiß zwischen der Prozeßdauer und einer gleichmäßigen Erwärmung der Bauteile und der zu bildenden Schicht darstellt. Die Abkühlrate sollte dann, nachdem das Silizium mit dem Kohlenstoff zur Reaktion gebracht ist, im Bereich von 20 bis 200 K/h, vorzugsweise mit etwa 70 K/h, erfolgen. Bei einer Abkühlrate von 70 K/h wird sichergestellt, daß Risse sukzessive in der Schicht entstehen können. Im Ofen, in dem die Temperaturbehandlung vorgenommen wird, sollte der Innendruck bei etwa ca. 10⁻³ - 10⁻⁶ bar gehalten werden. Mit diesem Innendruck wird erreicht, daß der Schmelzpunkt von Silizium von ca. 1420°C erreicht wird, eine Oxidation verhindert wird und eine schnelle Konvertierung von Silizium und Kohlenstoff zu Siliziumkarbid erfolgt.

Nachfolgend werden Beispiele des erfindungsgemäßen Verfahrens unter Bezugnahme auf die beigefügten Zeichnungen beschrieben. In den Zeichnungen zeigen
Figuren 1A bis 1C schematisch die Verfahrensstufen zum Aufbau einer Schutzschicht gemäß dem erfindungsgemäßen Verfahren auf einem Grundkörper,
Figur 2 eine Elektronenmikroskopaufnahme der Schutzschicht unter einer 200-fachen Vergrößerung,
Figur 3 eine Anordnung im Querschnitt, mit der der Aufbau einer Schutzschicht auf der Außenseite eines Rohr erfolgt, zeigt, und
Figur 4 eine Anordnung im Querschnitt, mit der der Aufbau einer Schutzschicht auf der Innenseite eines Rohrs erfolgt, zeigt.

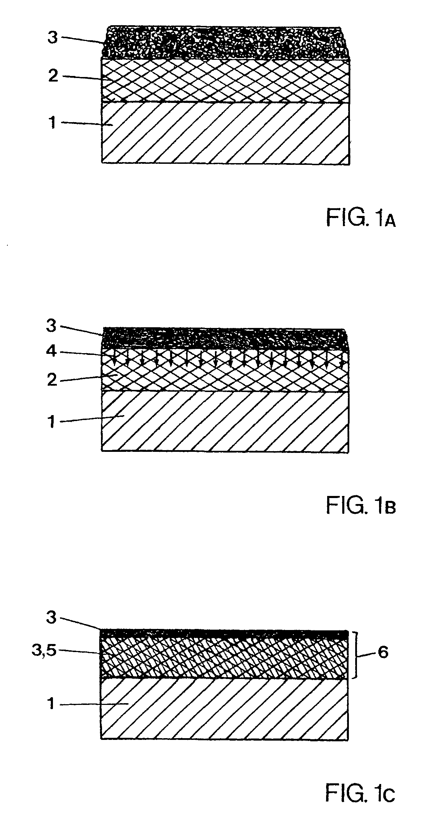

Um die Oberfläche eines Körpers mit einer Schutzschicht der erfindungsgemäßen Art zu versehen, wird ein Grundkörper 1, beispielsweise eine faserverstärkte Keramikscheibe (C/C-SiC Grundscheibe), zunächst mit einer Diamantscheibe, Körnung 150, eben geschliffen. Um eine 2 mm dicke Schicht als Schutzschicht aufzubauen, wird dann der Grundkörper 1 mit einem 2 mm dicken Kohlenstoff-Vlies 2, bestehend aus 15 Einzellagen der Dicke von 0,13 mm und einem Flächengewicht von 30 g/m², belegt. Dieser Kohlenstoff-Vlies 2 weist eine Masse von 19,6 g auf, bezogen auf die zu beschichtende Fläche, z.B. eine Reibfläche, und wird mit dem 12,5-fachen Gewicht an Silizium 3, d.h. mit insgesamt 245 g Silizium (Reinheit: 99,9% und Korngröße 0 - 15 mm), gleichmäßig bestreut, wie die Figur 1A zeigt.

Anschließend wird in einem Vakuumofen bei einem Innendruck von etwa 10⁻⁵ bar mit einer Heizrate von 40 K/h zunächst auf 1650°C (Figur 1B) aufgeheizt. Bei 1420°C beginnt das Silizium 3 zu schmelzen und tritt in den Kohlenstoff-Vlies ein, wie in Figur 1 B mit den Pfeilen 4 angedeutet ist. Bei der Temperatur zwischen 1420°C und 1650°C findet die Reaktion mit Kohlenstoff statt, so daß sich Siliziumkarbid 5 bildet. Da aufgrund der Mengen an Silizium 3, die auf die Kohlenstoff-Vliesschicht aufgestreut wurde, Silizium im Verhältnis zum Kohlenstoff im stöchiometrischen Überschuß bereitgestellt wurde, verbleibt, nach der Temperaturbehandlung, wie in der Figur 1C angedeutet ist, ein Rest an freiem Silizium sowohl in dem Siliziumkarbid 5 eingebettet als auch als äußere Schicht. Bei den vorstehend angegebenen Ausgangs-Mengen an Kohlenstoff und Silizium liegt Siliziumkarbid (SiC) mit etwa 20% Massenanteil bezogen auf die Schutzschicht 6 bestehend aus Si und SiC vor, während freies Silizium in einer Menge von 80% bezogen auf die Gesamtmasse Si und SiC vorliegt. Über die Art des Kohlenstoff-Vlieses, und zwar über dessen Porosität, kann die Verteilung des freien Siliziums 3, das sich im Siliziumkarbid 5 einlagert, eingestellt werden.

Nach Abschluß der Temperaturbehandlung bei 1650°C wird der Körper abgekühlt, vorzugsweise mit einer Abkühlrate von 70 K/h, und zwar unter Belassung der Einheit im Ofen bei dem vorstehend angegebenen Innendruck des Ofens. Während der Abkühlphase können kleine Spannungsrisse entstehen. Solche Spannungsrisse sind toleriererbar.

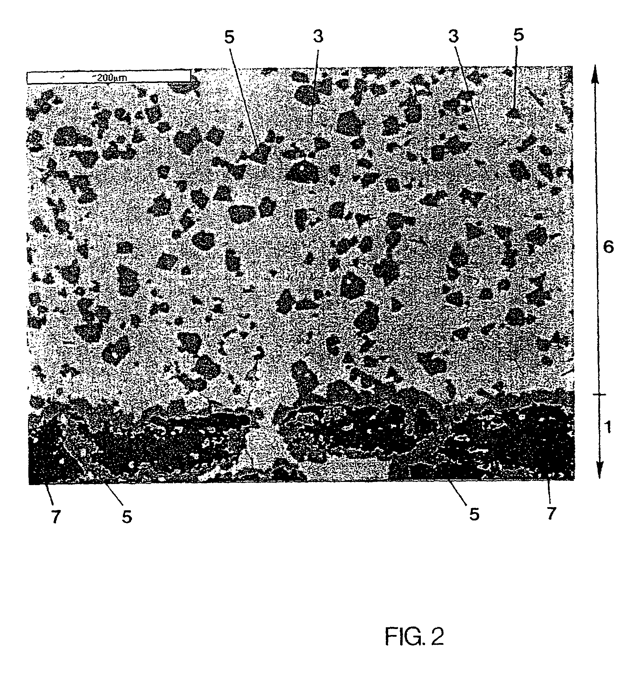

Der fertige, mit der Schutzschicht 6 beschichtete Grundkörper 1 weist eine Struktur im Übergangsbereich zwischen Grundkörper 1 und Schutzschicht 6 auf, betrachtet im Elektronenmikroskop, wie sie in Figur 2 gezeigt ist. Die hellgrauen Flächen sind freies Silizium 3, die dunkelgrauen Flächen 5 zeigen SiC und die schwarzen Flächen 7 sind Kohlenstoff im Grundkörper 1 (Fasern und Matrix). In der Schutzschicht 6 beträgt der Anteil an freiem Silizium 3 in der Schutzschicht 6 etwa 80% bezogen auf die Masse dieser Schutzschicht 6. Da die Figur 2 nur einen kleinen Ausschnitt im Übergangsbereich zwischen Grundkörper 1 und Schutzschicht 6 zeigt, ist ein eventuell auf der Außenseite verbleibender Teil der Schutzschicht, der das überschüssige Silizium enthält, wie dies in der Figur 1C schematisch dargestellt ist, nicht zu sehen.

Der Vorteil dieser Schutzschicht 6, wie sie vorstehend beschrieben ist, ist darin zu sehen, daß sie eine gute Haftung, selbst auf orthotropen Grundkörpern, hat, sie besitzt eine hohe Härte bei einer dennoch vorhandenen Elastizität, sie ist kostengünstig herzustellen, dicht und bildet eine nicht poröse Schicht aufgrund der Anomalie des Siliziums.

Der Anteil an freiem Si in der Schutzschicht 6 sorgt für eine fest haftende Verbindung mit dem zu beschichtenden Grundkörper 1. Außerdem kann durch die Menge an freiem Si die Zähigkeit und Elastizität der Schutzschicht 6 eingestellt werden, wobei sich sowohl die Zähigkeit als auch die Elastizität gegenüber einer reinen Schicht aus SiC durch den Anteil an freiem Si verbessert. Die Schicht 6 ist dicht, d.h. sie besitzt kaum Poren, da das Silizium beim Erstarren eine Volumenzunahme zeigt; damit treten keine Schwindungsporen auf, sondern nur Spannungsrisse beim weiteren Abkühlen auf Raumtemperatur, wenn die Wärmeausdehnung von Schicht 6 und Grundmaterial 1 unterschiedlich sind. Die Steigung der Bruchzähigkeit der Schicht läßt sich dadurch erklären, daß Silizium eine Härte von 7 nach Mohs besitzt, während die Härte von SiC zwischen 9,5 - 9,75 liegt. Auch führt dies zu der geringen Sprödigkeit der Schicht. Weiterhin hat Silizium aufgrund seines gegenüber Siliziumkarbid geringeren Wärmeausdehnungskoeffizienten von 2,6 • 10⁻⁶ K⁻¹ (gegenüber 4,7 • 10⁻⁶ K⁻¹ von SiC) eine höhere Temperaturwechselbeständigkeit, was die Temperaturwechselbeständigkeit der Schutzschicht insgesamt erhöht. Dies erhöht gerade bei einer Bremsscheibe die Haftfestigkeit der Reibschicht.

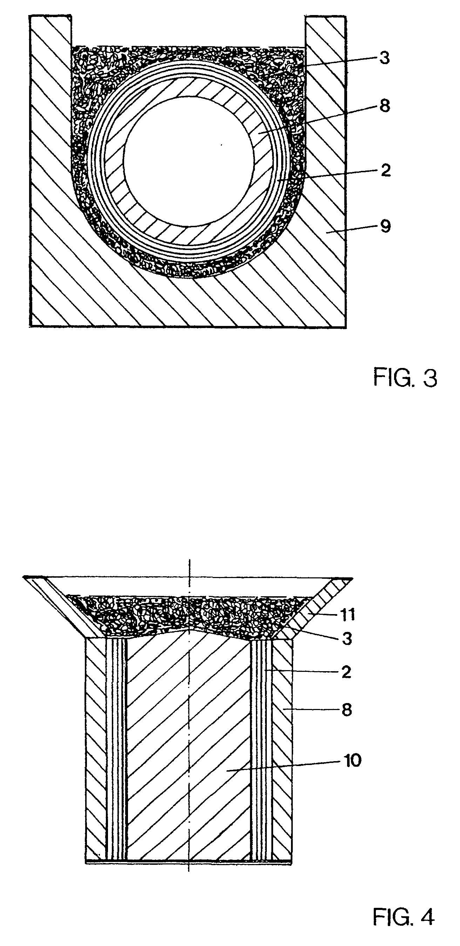

Ein weiteres Beispiel für einen vorteilhaften Einsatz des Verfahrens gemäß der Erfindung ist der Überzug eines rohrförmigen Grundkörpers 8 mit einer solchen Schutzschicht. Hierzu wird, wie in Figur 3 gezeigt ist, zum Beispiel ein C/C-SiC-Rohr 8, das mit einer Schutzschicht außen versehen werden soll, mit sieben Lagen aus Kohlenstoff-Vlies 2 (Flächengewicht 30 g/m²) umwickelt. Es wird eine der Endkontur des Rohrs entsprechende Wanne aus Graphit bereitgestellt. Anschließend wird das zu beschichtende Rohr 8, allseitig von Si-Granulat umgeben, in diese Wanne bzw. den Graphit-Tiegel 9 eingelegt und dann die Temperaturbehandlung, wie sie auch anhand der Figuren 1A bis 1B vorstehend beschrieben ist, durchgeführt. Während der Wärmebehandlung bei 1650°C für bis zu 1 Stunde wird das Si-Granulat 3 mit dem Kohlenstoff des Kohlenstoff-Vlies 2 zur Reaktion gebracht, so daß sich eine Struktur ergibt, wie dies auch in Figur 1C dargestellt ist. Danach wird wiederum auf Raumtemperatur abgekühlt. Auf diese Art und Weise können solche Rohre 8 mit einer äußeren Schutzschicht 6 überzogen werden.

Falls beispielsweise ein rohrförmiger Körper auf der Innenseite beschichtet werden soll, kann wie folgt vorgegangen werden: es wird beispielsweise ein Rohr 8 aus C/C-SiC bereitgestellt und innen mit sieben Lagen Kohlenstoff-Vlies 2 (Flächengewicht 30g/m²) ausgekleidet, wie anhand von Figur 4 zu erkennen ist. In diesem Innenraum wird nun ein Graphitkern 10 eingebracht. Für die Silizierung wird das Rohr 10 stehend in einen Vakuumofen eingebracht und mit einer Art Trichter als Vorratsbehältnis für das benötigte Silizium 3 versehen. Die Temperaturbehandlung erfolgt dann analog zur Beschichtung der äußeren Rohrseite. Das geschmolzene Silizium fließt in den porösen Kohlenstoffkörper und reagiert dort mit dem Kohlenstoff zu SiC. Der Anteil des freien SiC wird dort über das im Überschuß in den Trichter 11 eingegebene Silizium eingestellt.

Anhand des vorstehenden Beispiels ist ersichtlich, daß auch komplizierte Strukturen, die mit einer Siliziumkarbid enthaltenden Schutzschicht einer definierten Dicke überzogen werden sollen, auf diese Art und Weise herstellbar sind.

## Patentansprüche

1. Verfahren zum Erzeugen einer Siliziumkarbid enthaltenden Schutzschicht, insbesondere einer Verschleiß-, Korrosions- oder Abrasions-Schutzschicht, auf mindestens einem Teil einer Oberfläche eines Grundkörpers aus einem Werkstoff, dessen Erweichungstemperatur oberhalb der Schmelztemperatur von Silizium liegt, wobei der mit der Schutzschicht zu versehende Teil der Oberfläche des Grundkörpers mit einer porösen Kohlenstoffschicht versehen wird, auf diese Kohlenstoffschicht eine Siliziumquelle aufgebracht und der bedeckte Grundkörper in nicht-oxidierender Atmosphäre auf eine Temperatur oberhalb des Schmelzpunkts von Silizium erhitzt und danach abgekühlt wird, wobei zur Bildung einer homogenen Schutzschicht aus Siliziumkarbid und freiem Silizium die poröse Kohlenstoffschicht, deren offene Porosität im Bereich zwischen 40 und 95% liegt, mit einer Schicht aus Silizium als Silziumquelle bedeckt wird, wobei das Verhältnis der Masse des aufgebrachten Siliziums zu der des Kohlenstoffs in der porösen Kohlenstoffschicht mehr als 2,34 beträgt, und wobei der Grundkörper auf eine Temperatur zwischen 1420°C und 1650°C unter Vermeidung eines siedenden Zustands des Siliziums erhitzt wird, und anschließend der Grundkörper auf Raumtemperatur abgekühlt wird.

2. Verfahren nach Anspruch 1, **dadurch gekennzeichnet, daß** die poröse Kohlenstoffschicht durch Auflegen von Kohlenstoff-Filz, -Matten, -Gewebe, -Folien, -Platten und/oder Kohlenstoff-Vlies auf den Grundkörper gebildet wird.

3. Verfahren nach Anspruch 1, **dadurch gekennzeichnet, daß** die poröse Kohlenstoffschicht durch Pyrolysieren von auf den Grundkörper aufgelegtem Papier, Pappe, Holz und/oder Holzzellstoff gebildet wird.

4. Verfahren nach Anspruch 1, **dadurch gekennzeichnet, daß** auf die poröse Kohienstoffschicht eine Silizium-Platte für die Reaktion mit dem Kohlenstoff aufgelegt wird.

5. Verfahren nach Anspruch 1, **dadurch gekennzeichnet, daß** auf die poröse Kohlenstoffschicht teilchenförmiges Silizium für die Reaktion mit dem Kohlenstoff aufgetragen wird.

6. Verfahren nach Anspruch 5, **dadurch gekennzeichnet, daß** teilchenförmiges Silizium mit einer Teilchengröße bis 15 mm auf die poröse Kohlenstoffschicht aufgebracht wird.

7. Verfahren nach Anspruch 1, **dadurch gekennzeichnet, daß** das auf die poröse Kohlenstoffschicht aufgebrachte Silizium eine Reinheit von 99,9% aufweist.

8. Verfahren nach Anspruch 1, **dadurch gekennzeichnet, daß** das Verhältnis der Masse von aufgebrachtem Silizium zu der des Kohlenstoffs im Bereich von 2,35 bis 49 ausgewählt wird.

9. Verfahren nach Anspruch 8, **dadurch gekennzeichnet, daß** das Verhältnis so eingestellt wird, daß nach Reaktion des Siliziums mit dem Kohlenstoff der Anteil an freiem Silizium im Bereich von 50% bis 90% bezogen auf die Masse Schutzschicht beträgt.

10. Verfahren nach Anspruch 9, **dadurch gekennzeichnet, daß** das Verhältnis so eingestellt wird, daß der Anteil an freiem Silizium im Bereich von 70% bis 90% liegt.

11. Verfahren nach Anspruch 1, **dadurch gekennzeichnet, daß** die Schutzschicht auf einem Grundkörper aus Kohlenstoff, einem Verbundkörper aus kohlenstoff-faser verstärktem Kohlenstoff, C-SiC, C/C-SiC oder SiC-SiC aufgebracht wird.

12. Verfahren nach Anspruch 11, **dadurch gekennzeichnet, daß** ein als Reibeinheit ausgebildeter Grundkörper eingesetzt wird.

13. Verfahren nach Anspruch 11, **dadurch gekennzeichnet, daß** ein als rohrförmiges Bauteil eines Wärmetauschers ausgebildeter Grundkörper eingesetzt wird.

14. Verfahren nach Anspruch 11, **dadurch gekennzeichnet, daß** ein als Gleitringdichtung ausgebildeter Grundkörper eingesetzt wird.

15. Verfahren nach Anspruch 1, **dadurch gekennzeichnet, daß** die Schutzschicht mit einer Dicke im Bereich von 0,2 bis 2 mm gebildet wird.

16. Verfahren nach Anspruch 1, **dadurch gekennzeichnet, daß** die gesamte Außenoberfläche des Grundkörpers mit der Schutzschicht versehen wird.

17. Verfahren nach Anspruch 1, **dadurch gekennzeichnet, daß** die gesamte Oberfläche des Grundkörpers mit der Schutzschicht versehen wird.

18. Verfahren nach Anspruch 1, **dadurch gekennzeichnet, daß** der mit der porösen Kohlenstoffschicht und der darauf aufgebrachten Schicht aus Silizium versehene Grundkörper mit einer im wesentlichen gleichmäßigen Heizrate auf die Temperatur zwischen 1420 und 1650°C gebracht, auf dieser Temperatur während einer Zeit im Bereich von 1 bis 60 Minuten gehalten und danach mit einer im wesentlichen gleichmäßigen Abkühlrate auf Raumtemperatur abgekühlt wird.

19. Verfahren nach Anspruch 18, **dadurch gekennzeichnet, daß** der Grundkörper mit einer Heizrate im Bereich von 40 bis 400 K/h aufgeheizt wird.

20. Verfahren nach Anspruch 19, **dadurch gekennzeichnet, daß** der Grundkörper mit einer Heizrate im Bereich von 40 bis 200 K/h aufgeheizt wird.

21. Verfahren nach Anspruch 19, **dadurch gekennzeichnet, daß** der Grundkörper mit einer Heizrate von 80 K/h aufgeheizt wird.

22. Verfahren nach Anspruch 18, **dadurch gekennzeichnet, daß** der aufgeheizte Grundkörper mit einer Abkühlrate im Bereich von 20 bis 200 K/h abgekühlt wird.

23. Verfahren nach Anspruch 22, **dadurch gekennzeichnet, daß** der aufgeheizte Grundkörper mit einer Abkühlrate von etwa 70 K/h abgekühlt wird.

24. Verfahren nach Anspruch 1, **dadurch gekennzeichnet, daß** während des Erhitzens und des Abkühlens ein Druck von etwa 10⁻³ - 10⁻⁶ bar aufrechterhalten wird.

## Claims

1. Method for making a protective coating containing silicon carbide, particularly a war/tear, corrosion or abrasion protective coating, on at least a portion of the surface of a base substrate made from a material with a softening temperature that is above the melting temperature of silicon, wherein the portion of the base substrate, to be layered with the protective coating, is provided with a porous carbon layer, then a silicon source is deposited onto the carbon layer and the covered base substrate is heated to a temperature above the melting point of silicon in a non-oxidizing atmosphere and is thereafter cooled down, wherein, to achieve a homogeneous protective coating of silicon carbide and free silicon, the porous carbon coating with an open porosity in a range between 40 and 95%, is covered with a layer from silicon used as silicon source, wherein the ratio of the mass of the applied silicon to that of the carbon in the porous carbon coating is greater than 2.34, and wherein the substrate is heated to a temperature between 1.420°C and 1.650°C under avoidance of a boiling condition of the silicon, and wherein the substrate is then cooled down to room temperature.

2. Method according to claim 1, **characterized in that** the porous carbon coating is created by placing carbon felt, mats, waves, foils, plates and/or carbon fleece on the substrate.

3. Method according to claim 1, **characterized in that** the porous carbon coating is created through pyrolysis of paper, cardboard, wood and/or wood pulp placed on the substrate.

4. Method according to claim 1, **characterized in that** a silicon plate is placed on the porous carbon coating for reaction with the carbon.

5. Method according to claim 1, **characterized in that** particle-like silicon is deposited on the porous carbon coating for reaction with the carbon.

6. Method according to claim 5, **characterized in that** particle-like silicon with a particle size of up to 15 mm is deposited on the porous carbon coating.

7. Method according to claim 1, **characterized in that** the silicon deposited on the porous carbon coating has a purity of 99.9%.

8. Method according to claim 1, **characterized in that** the ratio of the deposited silicon mass to that of the carbon is selected from within a range of 2.34 to 49.

9. Method according to claim 8, **characterized in that** the ratio is adjusted such that after the reaction of the silicon with the carbon, the portion of free silicon is in a range of 50% to 90% in relation to the mass of the protective coating.

10. Method according to claim 9, **characterized in that** the ratio is adjusted such that the portion of free silicon is in a range of 70% to 90%.

11. Method according to claim 1, **characterized in that** the protective coating is applied to a substrate made of a material selected from the group consisting of carbon, a composite of carbon fiber reinforced carbon, C-SiC, C/C-SiC and SiC-SiC.

12. Method according to claim 11, **characterized in that** the substrate that is used is structured as a friction unit.

13. Method according to claim 11, **characterized in that** the substrate is used as a pipe-shaped component of a heat exchanger.

14. Method according to claim 11, **characterized in that** the substrate is a sliding ring seal.

15. Method according to claim 1, characerized in that the protective coating is created with a thickness of 0.2 to 2 mm.

16. Method according to claim 1, **characterized in that** the entire outer surface of the substrate is provided with the protective coating.

17. Method according to claim 1, **characterized in that** the entire surface of the substrate is provided with the protective coating.

18. Method according to claim 1, **characterized in that** the substrate, provided with the porous carbon coating and the silicon coating applied on top, is heated at a substantially uniform heating rate to a temperature of between 1420 and 1650°C, is kept at that temperature for a period in the range of 1 to 60 minutes and is then cooled down to room temperature with a substantially uniform cooling rate.

19. Method according to claim 18, **characterized in that** the substrate is heated with a heating rate in a range of 40 to 400 K/h.

20. Method according to claim 19, **characterized in that** the substrate is heated with a heating rate in a range of 40 to 200 K/h.

21. Method according to claim 19, **characterized in that** the substrate is heated with a heating rate of 80 K/h.

22. Method according to claim 18, **characterized in that** the heated substrate is cooled down with a cooling rate in a range of 20 to 200 K/h.

23. Method according to claim 22, **characterized in that** the heated substrate is cooled down with a cooling rate of approximately 70 K/h.

24. Method according to claim 1, **characterized in that** a pressure of about 10⁻³ - 10⁻⁶ bar is maintained during the heating and cooling phase

## Revendications

1. Procédé pour la fabrication d'une couche de protection contenant du carbure de silicium, en particulier une couche de protection contre l'usure, la corrosion ou l'abrasion sur au moins une partie d'une surface d'un corps de base dans un matériau dont la température de ramollissement se situe au-dessus de la température de fusion du silicium, la partie de la surface du corps de base à munir de la couche protectrice étant munie d'une couche de carbone poreuse, une source de silicium étant appliquée sur cette couche de carbone et le corps de base recouvert étant amené à une température supérieure au point de fusion du silicium dans une atmosphère non oxydante pour être ensuite refroidi, pour la formation d'une couche de protection homogène en carbure de silicium et en silicium libre, la couche de carbone poreux, dont la porosité ouverture se situe entre 40 et 95 %, étant recouverte d'une couche en silicium en tant que source de silicium, le rapport entre la masse du silicium appliqué et celle du carbone dans la couche de carbone poreuse étant supérieure à 2,34 et le corps de base étant chauffé à une température entre 1420°C et 1650°C en évitant un état d'ébullition du silicium et le corps de base étant ensuite refroidi à la température ambiante.

2. Procédé selon la revendication 1, **caractérisé en ce que** la couche poreuse de carbone est formée par application de feutres, de tapis, de tissus, de films, de plaques de carbone et/ou de voiles de carbone sur le corps de base.

3. Procédé selon la revendication 1, **caractérisé en ce que** la couche poreuse de carbone est formée par pyrolyse de papier, de carton, de bois et/ou de pâte de bois appliqué sur le corps de base.

4. Procédé selon la revendication 1, **caractérisé en ce qu'**il est appliqué sur la couche de carbone poreux une plaque de silicium pour la réaction avec le carbone.

5. Procédé selon la revendication 1, **caractérisé en ce qu'**il est appliqué sur la couche poreuse de carbone des particules de silicium pour la réaction avec le carbone.

6. Procédé selon la revendication 5, **caractérisé en ce** des particules de silicium de 15 mm maximum sont appliquées sur la couche de carbone poreuse.

7. Procédé selon la revendication 1, **caractérisé en ce que** le silicium appliqué sur la couche de carbone poreuse présente une pureté de 99,9 %.

8. Procédé selon la revendication 1, **caractérisé en ce que** le rapport entre la masse de silicium appliquée et celle du carbone est choisie entre 2,35 et 49.

9. Procédé selon la revendication 8, **caractérisé en ce que** le rapport est paramétré de sorte qu'après la réaction du silicium avec le carbone, la teneur en silicium libre s'inscrit entre 50 % et 90 % rapporté à la masse de la couche protectrice.

10. Procédé selon la revendication 9, **caractérisé en ce que** le rapport est paramétré de sorte que la teneur en silicium libre s'inscrit entre 70 % et 90 %.

11. Procédé selon la revendication 1, **caractérisé en ce que** la couche protectrice est appliquée sur un corps de base en carbone en corps de composite en carbone renforcé aux fibres de carbone, C-SIC, C/SIC ou SIC SIC.

12. Procédé selon la revendication 11, **caractérisé en ce qu'**un corps de base réalisé comme unité de friction est utilisé.

13. Procédé selon la revendication 11, **caractérisé en ce qu'**un corps de base réalisé comme un composant tubulaire d'un échangeur thermique est utilisé.

14. Procédé selon la revendication 1, **caractérisé en ce qu'**un corps de base réalisé comme une bague d'étanchéité glissante est utilisé.

15. Procédé selon la revendication 1, **caractérisé en ce que** la couche protectrice est réalisée avec une épaisseur comprise entre 0,2 et 2 mm.

16. Procédé selon la revendication 1, **caractérisé en ce que** l'ensemble de la surface externe du corps de base est muni de la couche protectrice.

17. Procédé selon la revendication 1, **caractérisé en ce que** l'ensemble de la surface du corps de base est muni d'une couche protectrice

18. Procédé selon la revendication 1, **caractérisé en ce que** le corps de base muni de la couche de carbone poreuse et la couche de silicium appliquée sont amenées à une température comprise entre 1420 et 1650°C à un débit de chauffe sensiblement homogène, sont maintenus à cette température pendant une période comprise entre 1 et 60 minutes et sont refroidis ensuite à un débit de refroidissement sensiblement homogène à la température ambiante.

19. Procédé selon la revendication 18, **caractérisé en ce que** le corps de base est chauffé à un débit de chauffage compris entre 40 et 400 K/h.

20. Procédé selon la revendication 19, **caractérisé en ce que** le corps de base est chauffé à un débit de chauffage compris entre 40 et 200 K/h.

21. Procédé selon la revendication 19, **caractérisé en ce que** le corps de base est chauffé à un débit de chauffage de 80 K/h.

22. Procédé selon la revendication 18, **caractérisé en ce que** le corps chauffé est refroidi à un débit de refroidissement compris entre 20 et 200 K/h.

23. Procédé selon la revendication 22, **caractérisé en ce que** le corps chauffé est refroidi à un débit de refroidissement d'environ 70 K/h.

24. Procédé selon la revendication 1, **caractérisé en ce que** pendant l'échauffement et le refroidissement une pression comprise entre environ 10-3 et 10-6 bars est maintenue.
